# EUROPÄISCHE PATENTSCHRIFT

(11) **EP 4 341 111 B1**
(45) Veröffentlichungstag und Bekanntmachung des Hinweises auf die Patenterteilung: **10.12.2025**
(21) Anmeldenummer: 22729135.8
(22) Anmeldetag: 12.05.2022
(51) Int. Cl.: B60J 3/04, B32B 17/10

(54) **FAHRZEUGSCHEIBE MIT PDLC-BESCHATTUNGSANORDNUNG**
VEHICLE WINDOWPANE WITH PDLC SUNSHADE ARRANGEMENT
VITRE DE VÉHICULE AVEC AGENCEMENT DE PARE-SOLEIL À CRISTAUX LIQUIDES DISPERSÉS DANS DES POLYMÈRES

(30) Priorität: 17.05.2021 DE 102021112677
(43) Veröffentlichungstag der Anmeldung: 27.03.2024
(73) Patentinhaber: Webasto SE, 82131 Stockdorf (DE)
(72) Erfinder: VERMA, Rajneesh, 82131 Stockdorf (DE)
(74) Vertreter: advotec.
(86) Internationale Anmeldenummer: PCT/EP2022/062950
(87) Internationale Veröffentlichungsnummer: WO 2022/243172

(56) Entgegenhaltungen:
- WO-A1-2007/077099
- WO-A1-2019/166209
- US-A1- 2016 325 529

## Beschreibung

Die Erfindung betrifft eine Fahrzeugscheibe mit den Merkmalen des Oberbegriffs des Patentanspruchs 1.

Eine derartige Fahrzeugscheibe ist aus der Praxis bekannt und insbesondere im Bereich eines Fahrzeugdachs als Festdachelement oder auch als verstellbares Deckelelement eines Dachöffnungssystems einsetzbar. Die Fahrzeugscheibe ist als Verbundbauteil ausgebildet, das einen Scheibenaußenkörper, der der Fahrzeugumgebung zugewandt ist, und einen Scheibeninnenkörper umfasst, der dem Fahrzeuginnenraum zugewandt ist und eine innere Sichtfläche der Fahrzeugscheibe bildet. Zwischen dem Scheibeninnenkörper und dem Scheibenaußenkörper ist eine Beschattungsanordnung angeordnet, die eine elektrisch schaltbare polymerdispergierte Flüssigkristallschicht, das heißt eine so genannte PDLC-Schicht umfasst. Die PDLC-Schicht ist zwischen zwei Folien angeordnet, an deren Innenseite jeweils eine transparente Elektrode angeordnet ist. Über die Elektroden ist die PDLC-Schicht zwischen einem Durchlasszustand und einem Sperrzustand schaltbar. Bei bisherigen Anwendungen ist die PDLC-Anordnung mit der PDLC-Schicht und den Kunststofffolien milchig ausgebildet. Zur Anpassung an das Erscheinungsbild des Fahrzeugs wird beispielsweise für den Scheibeninnenkörper oder den Scheibenaußenkörper gefärbtes Glas eingesetzt oder es werden gefärbte Klebefolien genutzt. Die Aufnahme von gefärbten Folien und dergleichen in den Verbundaufbau kann zu einer Eintrübung der Fahrzeugscheibe führen. Die Vielzahl der Schichten des Verbundaufbaus, der auch gefärbte Zwischenschichten umfassen kann, macht die Fertigung komplex und führt zu hohen Fertigungskosten. Des Weiteren liegt bei einer Fahrzeugscheibe mit einer PDLC-Anordnung als Beschattungsanordnung das Problem vor, dass die Flüssigkristalle der PDLC-Schicht bei Temperaturen über 60°C ihre Orientierung ändern.

Aus der US 2016/325529 A1 ist eine Fahrzeugscheibe mit einem Verbundaufbau bekannt. Der Verbundaufbau umfasst einen Scheibeninnenkörper, einen Scheibenaußenkörper und eine Beschattungsanordnung.

Der Erfindung liegt die Aufgabe zugrunde, eine gemäß der einleitend genannten Gattung ausgebildete Fahrzeugscheibe zu schaffen, die sich durch eine hohe optische Neutralität auszeichnet und die einen Schichtaufbau hat, der mit wenigen Schichten bei hoher Funktionalität auskommt.

Diese Aufgabe ist erfindungsgemäß durch die Fahrzeugscheibe mit den Merkmalen des Anspruchs 1 gelöst.

Gemäß der Erfindung wird also eine Fahrzeugscheibe, insbesondere eine Scheibe eines Fahrzeugdachs vorgeschlagen, die einen Verbundaufbau umfasst, der einen Scheibenaußenkörper und einen Scheibeninnenkörper sowie eine Beschattungsanordnung aufweist, die eine polymerdispergierte Flüssigkristallschicht (PDLC-Schicht) umfasst, die zwischen einem Durchlasszustand und einem Sperrzustand schaltbar ist und die zwischen dem Scheibeninnenkörper und dem Scheibenaußenkörper angeordnet ist. Die Beschattungsanordnung umfasst zudem zwei Kunststofffolien, zwischen denen die polymerdispergierte Flüssigkristallschicht angeordnet ist. Zumindest eine der Folien der Beschattungsanordnung und/oder die polymerdispergierte Flüssigkristallschicht sind/ist so mit einer Schwarzfärbung versehen, dass der Verbundaufbau im Durchlasszustand der Flüssigkristallschicht eine Durchlässigkeit für sichtbares Licht von weniger als 30% hat und im Sperrzustand der Flüssigkristallschicht eine Durchlässigkeit für sichtbares Licht von maximal 8% hat.

Durch die Schwarzfärbung der als schwarze PDLC-Anordnung ausgebildeten Beschattungsanordnung kann ein optisch ansprechendes Erscheinungsbild der Fahrzeugscheibe realisiert werden, das mit einer Vielzahl von Fahrzeugdesigns kompatibel ist.

Der Begriff "Schwarzfärbung" ist vorliegend in seinem weitesten Sinne zu verstehen und umfasst tiefschwarze und auch dunkelgraue Färbungszustände.

Durch die schwarze PDLC-Anordnung kann auf weitere Zwischenschichten oder einen gefärbten Scheibeninnenkörper zur Anpassung der Fahrzeugscheibe an das Fahrzeugdesign verzichtet werden. Auf eine Vielzahl von gegebenenfalls gefärbten Zwischenfolien oder dergleichen kann ebenfalls verzichtet werden, was wiederum im Vergleich zu bekannten Fahrzeugscheiben zu einer geringeren Eintrübung und damit zu einem besseren optischen Erscheinungsbild führt. Trotzdem erfüllt die Fahrzeugscheibe hohe Sicherheitsanforderungen, und zwar auch bei Anwendung als Deckelelement eines Dachöffnungssystems oder als Festdachelement eines Fahrzeugdachs.

Die Durchlässigkeit des Verbundaufbaus für sichtbares Licht ist sowohl im Durchlasszustand als auch im Sperrzustand der PDLC-Schicht gering, was auch zu einem geringen Lichteintrag durch die Fahrzeugscheibe in den Fahrzeuginnenraum führt.

Die schwarze PDLC-Anordnung zeichnet sich insbesondere durch eine starke Absorption von elektromagnetischer Strahlung in einem Wellenlängenbereich zwischen 350 nm und 2500 nm aus. Für sichtbares Licht liegt die Durchlässigkeit damit unter 30%. Auch für Infrarotstrahlung im Bereich zwischen 700 nm und 2500 nm kann die Durchlässigkeit unter 40% liegen.

Die Schwarzfärbung der PDLC-Anordnung kann im Lab-Farbraum insbesondere durch die Farbkoordinaten L, a und b definiert sein, wobei L < 30, -15 < a < 15 und -15 < b < 15 ist.

Die Schwarzfärbung der mindestens einen Kunststofffolie der Beschattungsanordnung und/oder der Flüssigkristallschicht, das heißt des Polymers der Flüssigkristallschicht kann durch Einsatz geeigneter Farbstoffe und/oder durch geeignete Auswahl der eingesetzten Werkstoffe und deren Chemismus eingestellt werden.

Durch die Schwarzfärbung der PDLC-Anordnung ist es möglich, die Durchlässigkeit für sichtbares Licht, das direkt auf die PDLC-Anordnung einfällt, im Sperrzustand der Flüssigkristallschicht auf Werte unter 2% und insbesondere sogar unter 1% zu senken. Im Durchlasszustand der Flüssigkristallschicht liegt die Durchlässigkeit für sichtbares Licht vorzugsweise in einem Bereich zwischen 2% und 30%.

Die Trübung der schwarzen PDLC-Anordnung liegt im Durchlasszustand der PDLC-Schicht bei maximal 5%.

Die Kunststofffolien haben zweckmäßigerweise an ihren Innenseiten jeweils eine transparente Elektrode, so dass die angrenzende polymerdispergierte Flüssigkristallschicht durch Änderung des elektrischen Feldes zwischen dem Sperrzustand und dem Durchlasszustand verstellt werden kann. Die Kunststofffolien können insbesondere als PET (Polyethylenterephtalat)-Folie, COP (zyklisches Olefin-Polymer)-Folie oder auch als PC-(Polycarbonat)-Folie ausgebildet sein, und mit ITO (Indiumzinnoxid) oder PEDOT:PSS beschichtet sein, um die Elektroden für die PDLC-Schicht auszubilden.

Die PDLC-Schicht kann eine PNLC(Polymer Network Liquid Crystal)-Schicht sein, bei der durch Anlegen einer Spannung der Durchlasszustand erzeugt wird und ohne Spannung der Sperrzustand vorliegt. Alternativ kann sie eine Schicht sein, bei der in jedem Schaltzustand eine Spannung anliegt. Dann handelt es sich um eine so genannte inverse, bistabile PDLC-Schicht. Unabhängig von der gewählten PDLC-Schicht-Variante kann die PDLC-Schicht segmentiert sein oder mit einem Muster versehen sein.

Um die Funktionsfähigkeit der Beschattungsanordnung auch bei hohen Außentemperaturen zu gewährleisten, umfasst der Verbundaufbau einer bevorzugten Ausführungsform der Fahrzeugscheibe nach der Erfindung an der dem Scheibenaußenkörper zugewandten Seite der polymerdispergierten Flüssigkristallschicht mindestens eine Schicht zur Reflektion von Infrarotstrahlung. Damit können ungewünschte Defekte vermieden werden, die durch Absorption von Wärme durch die PDLC-Schicht resultieren könnten.

Das Reflektionsvermögen der Schicht zur Reflektion von Infrarotstrahlung beträgt vorzugsweise mehr als 60%. Insbesondere bei einem Reflektionsvermögen der Schicht von weniger als 60% für Infrarotstrahlung, beispielsweise von 2% bis 60%, kann eine weitere Schicht zur Reflektion von Infrarotstrahlung zwischen dem Scheibenaußenkörper und der schwarzen PDLC-Anwendung vorgesehen sein. Diese weitere Schicht kann zusätzlich an der PDLC-Anordnung angeordnet sein, beispielsweise an einer zusätzlich aufgebrachten Folie, die damit eine IR-beschichtete PET-Folie sein kann, oder auch an der Unterseite des Scheibenaußenkörpers oder auch in sonstiger Weise zwischen dem Scheibenaußenkörper und der schwarzen PDLC-Anordnung. Durch die zusätzliche Schicht kann eine Gesamtreflektion des Verbundaufbaus für Infrarotstrahlung von mindestens 60% erreicht werden.

Bei einer speziellen Ausführungsform der Fahrzeugscheibe nach der Erfindung ist die Schicht zur Reflektion von Infrarotstrahlung an der dem Scheibenaußenkörper zugewandten Folie der Beschattungsanordnung angeordnet, und zwar in Form einer direkten Beschichtung oder einer zusätzlichen beschichteten Folie, die mit der Schicht versehen ist und auf die PDLC-Anordnung aufgeklebt ist. Die Schicht bildet also eine Beschichtung dieser Folie.

Denkbar ist es auch, dass die Schicht zur Reflektion von Infrarotstrahlung an der Innenseite des Scheibenaußenkörpers angeordnet ist.

Um die Reflektionswirkung für Infrarotstrahlung besonders hoch zu halten und das Durchlassvermögen für sichtbares Licht hoch zu halten, hat die Schicht zur Reflektion von Infrarotstrahlung bei einer speziellen Ausführungsform der Fahrzeugscheibe nach der Erfindung einen Mehrschichtaufbau, der eine so genannte Low-E-Beschichtung (Low-E = niedrige Emissivität) darstellt. Die Ausbildung der Schicht zur Reflektion von Infrarotstrahlung als Mehrschichtaufbau führt zu einem hohen Reflektionsvermögen insbesondere in dem Wellenlängenbereich zwischen 650 nm und 2500 nm.

Ein hohes Reflektionsvermögen kann insbesondere dadurch erreicht werden, dass die Schicht zur Reflektion von Infrarotstrahlung bzw. die einzelnen Schichten des Mehrschichtaufbaus aus mindestens einem der Stoffe der Gruppe gebildet ist, die Metalle, wie Gold, Silber und Kupfer, und Oxide, wie Zinnoxid, Titandioxid, Zinkoxid, Indium-Zinn-Oxid, fluoriertes Zinnoxid, Zink-Zinn-Oxide und Aluminiumoxid umfasst.

Bei einer speziellen Ausführungsform der Fahrzeugscheibe nach der Erfindung sind beide Kunststoffschichten der Beschattungsanordnung mit einer Schicht zur Reflektion von Infrarotstrahlung versehen.

Die mit einer Schwarzfärbung versehene Beschattungsanordnung bietet insbesondere im Zusammenhang mit schwarzen Keramikfritten ein positives optisches Erscheinungsbild. Der Schutz gegen Infrarotstrahlung wird durch die entsprechende reflektierende Beschichtung der Beschattungsanordnung gewährleistet. Die Reflektionsbeschichtung schützt nicht nur den Fahrzeuginnenraum vor überhohem Wärmeeintrag, sondern auch die Flüssigkristallschicht, so dass deren Funktion auch bei hohen Außentemperaturen gewährleistet bleibt.

Des Weiteren ist es möglich, die polymerdispergierte Flüssigkristallschicht so auszubilden, dass sie segmentiert geschaltet und/oder kontinuierlich zwischen dem Durchlasszustand und dem Sperrzustand verstellt werden kann.

Der Scheibeninnenkörper und der Scheibenaußenkörper sind bei einer speziellen Ausführungsform der Fahrzeugscheibe nach der Erfindung jeweils gewölbt ausgebildet, und zwar in Scheibenlängsrichtung und/oder in Scheibenquerrichtung. Der die Wölbung definierende Krümmungsradius kann in der betreffenden Richtung variieren und beispielsweise einen Wert zwischen 1.000 mm und 10.000 mm, insbesondere zwischen 2.000 mm und 5.000 mm haben. Die Beschattungsanordnung kann den Wölbungen folgen.

Die Anbindung der Beschattungsanordnung an den Scheibenaußenkörper und an den Scheibeninnenkörper erfolgt jeweils mittels einer Polymerklebefolie oder eines Klebers bevorzugt in direkter Weise. Zwischenfolien bzw. Zwischenschichten sind nicht erforderlich. Die Polymerklebefolien sind beispielsweise aus einem thermoplastischen Polyurethan (TPU), Ethylenvinylacetat (EVA), Polyvinylbutyral (PVB), einem Epoxid, Silikon, Polyethylen oder aus einer sonstigen transparenten Kunststofffolie gebildet. Der Brechungsindex der jeweils eingesetzten Polymerklebefolie liegt vorzugsweise im Bereich desjenigen des Scheibeninnenkörpers bzw. des Scheibenaußenkörpers und hat beispielsweise einen Wert von etwa 1,5.

Um die Fahrzeugscheibe nach der Erfindung auch als so genanntes Ambient-Light-Bauteil nutzen zu können, das im Fahrzeuginnenraum einen flächigen Leuchtkörper bildet, ist bei einer bevorzugten Ausführungsform der Fahrzeugscheibe nach der Erfindung mindestens eine Lichtquelle vorgesehen, wobei der Scheibeninnenkörper eine Streuscheibe bildet, in die Licht der Lichtquelle einkoppelbar ist, so dass der Scheibeninnenkörper als Ganzes oder in definierten Segmenten leuchtet. Die Funktionen eines schaltbaren Glases, eines Wärmeschutzes und einer Ambient-Light-Beleuchtung sind dann in der Fahrzeugscheibe nach der Erfindung integriert. Die schwarze PDLC-Anordnung begünstigt dem Ambient-Light-Effekt.

Um die Lichteinkopplung und die Lichtauskopplung aus dem Scheibeninnenkörper zu optimieren, ist bei einer speziellen Ausführungsform der Fahrzeugscheibe nach der Erfindung an der dem Scheibeninnenkörper zugewandten Kunststofffolie der Beschattungsanordnung eine Reflektionsschicht zur Reflektion sichtbaren Lichts angeordnet, deren Reflektionsvermögen vorzugsweise mindestens 2% beträgt und/oder die eine Schicht zur Reflektion von Infrarotstrahlung bilden kann. Zusätzlich wird der Ambient-Light-Effekt durch innere Reflektion in dem Scheibeninnenkörper verstärkt.

Die Reflektionsschicht zur Reflektion sichtbaren Lichts kann ebenfalls als Mehrschichtaufbau oder als Einzelschicht ausgebildet sein. Die Einzelschicht oder die Schichten des Mehrschichtaufbaus können jeweils aus mindestens einem der Stoffe der Gruppe gebildet sein, die beispielsweise Silber, Gold, Kupfer, Zinnoxid, Titandioxid, Zinkoxid, Indium-Zinn-Oxid, fluoriertes Zinnoxid, Zink-Zinn-Oxide und Aluminiumoxid umfasst.

Durch die schwarze PDLC-Anordnung mit der polymerdispergierten Flüssigkristallschicht und den beiden Kunststofffolien, die mit den Reflektionsschichten versehen sind, kann bei einer speziellen Ausführungsform ein Anteil von beispielsweise mindestens 2% des von der Lichtquelle eingetragenen Lichts in Richtung Fahrzeuginnenraum ausgekoppelt werden.

Um die Auskopplung des Lichts aus der Streuschicht in Richtung Fahrzeuginnenraum zu verbessern, ist es vorteilhaft, wenn an der Reflektionsschicht zur Reflektion sichtbaren Lichts Streuzentren angeordnet sind. Alternativ oder zusätzlich können Streuzentren auch in den Scheibeninnenkörper integriert sein oder an zumindest einer der Flächen des Scheibeninnenkörpers aufgebracht sein. Vorzugsweise sind Streuzentren bzw. Streumedien zwischen der schwarzen PDLC-Anordnung und dem Scheibeninnenkörper angeordnet.

Die Lichtstreuzentren können aus jedem geeigneten Material bzw. Medium gebildet sein, beispielsweise aus Teilchen aus einem opaken organischen, anorganischen, insbesondere auch keramischen Material, aus einer transparenten, semitransparenten oder auch opaken Bedruckung, aus einem Muster oder einer Struktur, die an dem Scheibeninnenkörper eingeätzt, eingraviert oder durch Laserablation hergestellt ist. Das semitransparente Material kann direkt auf Glas gedruckt sein und/oder als gedruckter Film zwischen zwei Glasschichten ausgebildet sein.

Der Scheibenaußenkörper und der Scheibeninnenkörper der Fahrzeugscheibe nach der Erfindung können aus Klarglas oder einem sonstigen geeigneten Glas oder auch aus einem Kunststoffwerkstoff, wie Polycarbonat, gefertigt sein. Der Scheibeninnenkörper kann bei einer speziellen Ausführungsform auch aus einer harten, schlag- und kratzfesten Beschichtung gebildet sein, die an der dem Scheibenaußenkörper abgewandten Seite der PDLC-Anordnung ausgebildet ist.

Weitere Vorteile und vorteilhafte Ausgestaltungen des Gegenstades der Erfindung sind der Beschreibung, der Zeichnung und den Patentansprüchen entnehmbar.

Ausführungsbeispiele einer Fahrzeugscheibe nach der Erfindung sind in der Zeichnung schematisch vereinfacht dargestellt und werden in der nachfolgenden Beschreibung näher erläutert. Es zeigt:
- Figur 1: eine schematische Draufsicht auf ein Fahrzeugdach mit einer Fahrzeugscheibe nach der Erfindung;
- Figur 2: einen schematischen Schnitt durch die Fahrzeugscheibe;
- Figur 3: eine Beschattungsanordnung der Fahrzeugscheibe in einem Sperrzustand a) und in einem Durchlasszustand b);
- Figur 4: einen Schnitt durch eine Fahrzeugscheibe mit einer Beleuchtungsanordnung, und
- Figur 5: einen Schnitt durch eine weitere Ausführungsform einer Fahrzeugscheibe.

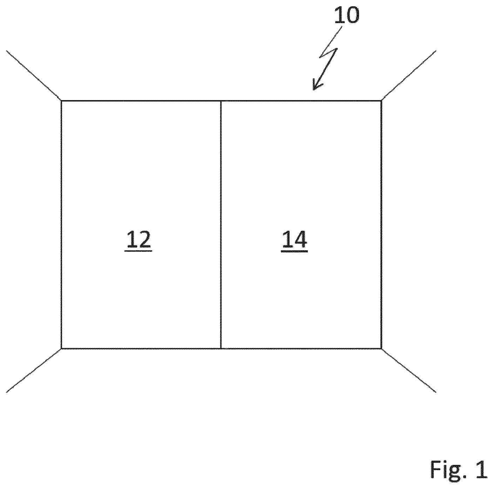

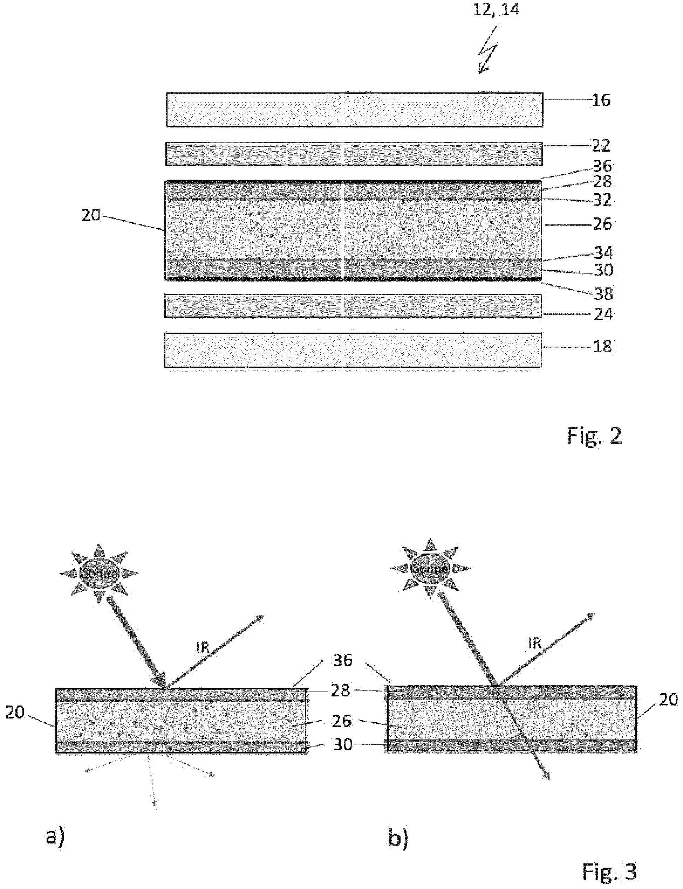

In Figur 1 ist ein Fahrzeugdach 10 eines ansonsten nicht näher dargestellten Kraftfahrzeugs gezeigt. Das Fahrzeugdach 10 ist ein Panoramadach, das ein verstellbares Deckelelement 12 und ein Festdachelement 14 aufweist, welches fest bzw. unbeweglich mit der Fahrzeugkarosserie verbunden ist. Das Deckelelement 12 und das Festdachelement 14 sind jeweils als Glaselement und mithin als Fahrzeugscheibe ausgebildet. Sie haben den gleichen Schichtaufbau, der anhand von Figur 2 dargestellt ist. Alternativ kann das Fahrzeugdach anstelle des Dachelements ein zweites Festdachelement oder anstelle des Festdachelements und des Dachelements ein einziges Festdachelement aufweisen.

Die jeweils als Fahrzeugscheibe ausgebildeten Dachelemente 12 und 14 stellen jeweils ein Verbundbauteil dar, das einen Scheibenaußenkörper 16 und einen Scheibeninnenkörper 18 umfasst. Der Scheibenaußenkörper 16 und der Scheibeninnenkörper 18 sind jeweils aus einem Kalk-Natron-Klarglas gefertigt.

Der Scheibenaußenkörper 16 ist der Fahrzeugumgebung zugewandt, wohingegen der Scheibeninnenkörper 18 dem Fahrzeuginnenraum zugewandt ist und eine innere Sichtfläche der Fahrzeugscheibe 10 bildet.

Zwischen dem Scheibenaußenkörper 16 und dem Scheibeninnenkörper 18 ist eine Beschattungsanordnung 20 angeordnet, welche über eine äußere Polymerklebefolie 22 oder einem Kleber an den Scheibenaußenkörper 16 und eine innere Polymerklebefolie 24 oder einem Kleber an den Scheibeninnenkörper 18 angebunden ist.

Die Beschattungsanordnung 20 ist eine schwarze PDLC-Anordnung und umfasst eine PDLC-Schicht 26, die beidseits jeweils von einer Kunststofffolie 28 bzw. 30 aus PET begrenzt ist. An der Innenseite der Kunststofffolien 28 und 30 ist jeweils eine transparente Elektrode 32 bzw. 34 angeordnet. Mittels der Elektroden 32 und 34 kann an die PDLC-Schicht 26 eine Spannung angelegt werden, so dass die PDLC-Schicht zwischen einem Sperrzustand und einem Durchlasszustand verstellt werden kann.

An der der PDLC-Schicht 26 abgewandten Seite haben die Kunststofffolien 28 und 30 jeweils eine Beschichtung 36 bzw. 38, die eine Reflektionsschicht darstellt. Die an der dem Scheibenaußenkörper 16 zugewandten Seite angeordnete Beschichtung 36 ist eine Schicht zur Reflektion zur Infrarotstrahlung, die einen Mehrschichtaufbau hat, der aus Schichten gebildet ist, die jeweils aus Silber, Gold, Kupfer, Zinnoxid, Titanoxid, Zinkoxid, Indium-Zinn-Oxid, fluoriertes Zinnoxid, Zink-Zinn-Oxid und/oder Aluminiumoxid gebildet sind.

Die dem Scheibeninnenkörper 18 zugewandte Beschichtung 38 hat ebenfalls einen Mehrschichtaufbau, dessen einzelne Schichten aus den vorgenannten Stoffen oder einer Mischung dieser Stoffe bestehen können.

Die Kunststofffolien 28 und 30 und die PDLC-Schicht 26 haben jeweils eine schwarze Einfärbung, die mittels eines in das jeweilige Material dispergierten Farbstoffs erzeugt ist.

Die PDLC-Schicht kann so geschaltet werden, dass sie in dem Sperrzustand, in dem keine Spannung an den Elektroden 32 und 34 anliegt, eine Durchlässigkeit für sichtbares Licht von weniger als 3% hat (vgl. Figur 3a). In dem Durchlasszustand, in dem eine Spannung an den Elektroden 32 und 34 anliegt, ist die Beschattungsanordnung 20 durch die schwarze Einfärbung der Kunststofffolien 28 und 30 und/oder der PDLC-Schicht derart für sichtbares Licht durchlässig, dass ein Anteil von etwa 10% durchtritt (vgl. Figur 3b).

Wie den Figuren 3a und 3b zu entnehmen ist, wird der Infrarotanteil des Sonnenlichts insbesondere an der dem Scheibenaußenkörper 16 zugewandten Beschichtung 36 zu mehr als 60%, beispielsweise zu etwa 70% reflektiert, so dass sowohl die PDLC-Schicht 26 als auch der unter der Fahrzeugscheibe liegende Innenraum des Fahrzeugs vor einer Überhitzung geschützt sind, und zwar sowohl im Durchlasszustand als auch im Sperrzustand der PDLC-Schicht 26.

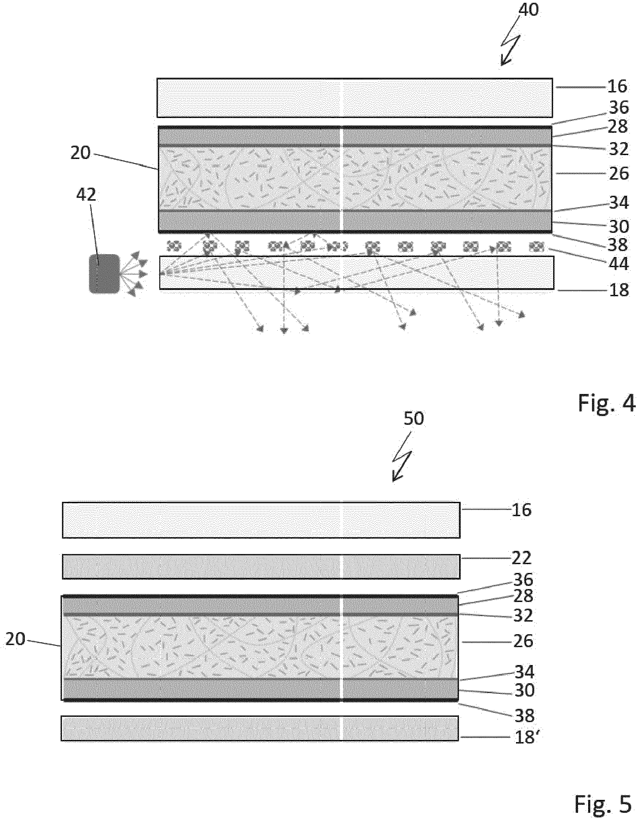

In Figur 4 ist eine Fahrzeugscheibe 40 dargestellt, die im Wesentlichen derjenigen nach Figur 2 entspricht, sich von dieser aber dadurch unterscheidet, dass sie zusätzlich mit einer Ambient-Light-Funktion in Form eines Flächenleuchtmittels versehen ist. Hierzu bildet der Scheibeninnenkörper 18 eine Streuscheibe für Licht, welches von einer Lichtquelle 42 abgebeben wird und das in den Scheibeninnenkörper 18 eingekoppelt wird. Zudem sind zwischen dem Scheibeninnenkörper 18 und der unteren Kunststofffolie 30, die die Beschichtung 38 aufweist, Streuzentren 44 angeordnet, die ein Auskoppeln des Lichts aus der Fahrzeugscheibe in Richtung des Fahrzeuginnenraums unterstützen. Die Beschichtung 38 ist eine Reflektionsschicht, die auch sichtbares Licht in Richtung des Fahrzeuginnenraums reflektiert.

Die Anbindung der Beschattungsanordnung 20 an den Scheibenaußenkörper 16 und an den Scheibeninnenkörper 18 erfolgt jeweils über eine Klebstoffschicht, welche nicht näher dargestellt ist.

Im Übrigen entspricht die Fahrzeugscheibe 40 derjenigen nach Figur 2.

Bei einer weiteren nicht dargestellten Ausführungsform kann zwischen dem Scheibeninnenkörper und der PDLC-Anordnung eine Klebefolie angeordnet sein, in die Licht einer Lichtquelle einkoppelbar ist. Im Übrigen entspricht diese Ausführungsform derjenigen nach Figur 4.

In Figur 5 ist eine Fahrzeugscheibe 50 dargestellt, die weitgehend derjenigen nach Figur 2 entspricht, sich von dieser aber dadurch unterscheidet, dass sie als Scheibeninnenkörper 18' eine harte Beschichtung bzw. Kratzfestbeschichtung der PDLC-Anordnung 20 umfasst. Der Scheibenaußenkörper 16 ist über einen Kleber an die PDLC-Anordnung 20 gebunden. Im Übrigen entspricht der Aufbau demjenigen nach Figur 2, weswegen auf die diesbezügliche Beschreibung verwiesen wird.

### Bezugszeichenliste

- 10: Fahrzeugdach
- 12: Deckelelement
- 14: Festdachelement
- 16: Scheibenaußenkörper
- 18, 18': Scheibeninnenkörper
- 20: Beschattungsanordnung
- 22: Polymerklebefolie
- 24: Polymerklebefolie
- 26: PDLC-Schicht
- 28: Kunststofffolie
- 30: Kunststofffolie
- 32: Elektrode
- 34: Elektrode
- 36: Beschichtung
- 38: Beschichtung
- 40: Fahrzeugscheibe
- 42: Lichtquelle
- 50: Fahrzeugscheibe

## Patentansprüche

1. Fahrzeugscheibe, insbesondere Scheibe eines Fahrzeugdachs, umfassend einen Verbundaufbau mit einem Scheibenaußenkörper (16) und einem Scheibeninnenkörper (18, 18') sowie einer Beschattungsanordnung (20), die zwischen dem Scheibenaußenkörper (16) und dem Scheibeninnenkörper (18) angeordnet ist und die zwei Kunststofffolien (28, 30) und eine polymerdispergierte Flüssigkristallschicht (26) umfasst, die zwischen den zwei Kunststofffolien (28, 30) angeordnet ist, wobei die Beschattungsanordnung (20) mittels einer Polymerklebefolie (22) oder eines Klebers an den Scheibenaußenkörper (16) und mittels einer Polymerklebefolie (24) oder eines Klebers an den Scheibeninnenkörper (18) angebunden ist, **dadurch gekennzeichnet, dass** zumindest eine der Kunststofffolien (28, 30) und/oder die polymerdispergierte Flüssigkristallschicht (26) derart mit einer Schwarzfärbung versehen sind/ist, dass der Verbundaufbau im Durchlasszustand der Flüssigkristallschicht eine Durchlässigkeit für sichtbares Licht von weniger als 30% hat und im Sperrzustand eine Durchlässigkeit für sichtbares Licht von maximal 8% hat.

2. Fahrzeugscheibe nach Anspruch 1, **dadurch gekennzeichnet, dass** der Verbundaufbau zwischen dem Scheibenaußenkörper (16) und der polymerdispergierten Flüssigkristallschicht eine Schicht zur Reflektion von Infrarotstrahlung hat.

3. Fahrzeugscheibe nach Anspruch 2, **dadurch gekennzeichnet, dass** die Schicht zur Reflektion von Infrarotstrahlung eine Beschichtung (36) der dem Scheibenaußenkörper (16) zugewandten Kunststofffolie (28) der Beschattungsanordnung (20) oder eine Beschichtung des Scheibenaußenkörpers an der der schwarzen PDLC-Anordnung zugewandten Seite oder eine beschichtete Folie zwischen dem Scheibenaußenkörper und der PDLC-Anordnung ist.

4. Fahrzeugscheibe nach Anspruch 2 oder 3, **dadurch gekennzeichnet, dass** die Schicht zur Reflektion von Infrarotstrahlung einen Mehrschichtaufbau hat.

5. Fahrzeugscheibe nach einem der Ansprüche 2 bis 4, **dadurch gekennzeichnet, dass** die Schicht zur Reflektion von Infrarotstrahlung aus mindestens einem der Stoffe der Gruppe gebildet ist, die Silber, Gold, Kupfer, Zinnoxid, Titandioxid, Zinkoxid, Indium-Zinn-Oxid, fluoriertes Zinnoxid, Zink-Zinn-Oxide und Aluminiumoxid umfasst.

6. Fahrzeugscheibe nach einem der Ansprüche 1 bis 5, **dadurch gekennzeichnet, dass** die Kunststofffolien (28, 30) der Beschattungsanordnung (20) PET-Folien sind.

7. Fahrzeugscheibe nach einem der Ansprüche 1 bis 6, **dadurch gekennzeichnet, dass** eine Lichtquelle (42) vorgesehen ist und dass der Scheibeninnenkörper (18) eine Streuscheibe ist, in die Licht der Lichtquelle (42) einkoppelbar ist.

8. Fahrzeugscheibe nach einem der Ansprüche 1 bis 7, **dadurch gekennzeichnet, dass** an der dem Scheibeninnenkörper (18) zugewandten Kunststofffolie (30) der Beschattungsanordnung (20) eine Reflektionsschicht zur Reflektion von sichtbarem Licht angeordnet ist.

9. Fahrzeugscheibe nach einem der Ansprüche 1 bis 8, **dadurch gekennzeichnet, dass** zwischen der PDLC-Anordnung und dem Scheibeninnenkörper (18) Lichtstreuzentren (44) angeordnet sind.

10. Fahrzeugscheibe nach einem der Ansprüche 1 bis 9, **dadurch gekennzeichnet, dass** die Beschattungsanordnung (20) mittels der Polymerklebefolie (22) oder des Klebers direkt an den Scheibenaußenkörper (16) und/oder mittels der Polymerklebefolie (24) oder des Klebers direkt an den Scheibeninnenkörper (18) angebunden ist.

11. Fahrzeugdach, umfassend eine Fahrzeugscheibe nach einem der Ansprüche 1 bis 10, wobei die Fahrzeugscheibe ein Deckelelement (12) eines Dachöffnungssystems oder ein Festdachelement (14) ist.

## Claims

1. A vehicle window pane, in particular a window pane of a vehicle roof, the vehicle window pane comprising a composite structure having an outer window pane body (16), an inner window pane body (18, 18'), and a shading arrangement (20) disposed between the outer window pane body (16) and the inner window pane body (18) and comprising two plastic films (28, 30) and a polymer-dispersed liquid-crystal layer (26) disposed between the two plastic films (28, 30), the shading arrangement (20) being connected to the outer window pane body (16) by means of an adhesive polymer film (22) or an adhesive and to the inner window pane body (18) by means of an adhesive polymer film (24) or an adhesive, **characterized in that** at least one of the plastic films (28, 30) and/or the polymer-dispersed liquid-crystal layer (26) are/is tinted black in such a manner that, the composite structure has a transparency for visible light of less than 30 % when the liquid-crystal layer is in a transparent state and a transparency for visible light of no more than 8 % in a blocking state.

2. The vehicle window pane according to claim 1, **characterized in that** the composite structure has a layer for reflecting infrared radiation between the outer window pane body (16) and the polymer-dispersed liquid-crystal layer.

3. The vehicle window pane according to claim 2, **characterized in that** the layer for reflecting infrared radiation is a coating (36) of the plastic film (28) of the shading arrangement (20) that faces the outer window pane body (16), or a coating of the outer window pane body on the side that faces the black PDLC arrangement, or a coated film between the outer window pane body and the PDLC arrangement.

4. The vehicle window pane according to claim 2 or 3, **characterized in that** the layer for reflecting infrared radiation has a multi-layer structure.

5. The vehicle window pane according to any one of claims 2 to 4, **characterized in that** the layer for reflecting infrared radiation is made of at least one of the substances from the group comprising silver, gold, copper, tin oxide, titanium dioxide, zinc oxide, indium tin oxide, fluorinated tin oxide, zinc tin oxide, and aluminum oxide.

6. The vehicle window pane according to any one of claims 1 to 5, **characterized in that** the plastic films (28, 30) of the shading arrangement (20) are PET films.

7. The vehicle window pane according to any one of claims 1 to 6, **characterized in that** a light source (42) is provided and that the inner window pane body (18) is a scattering pane into which light of the light source (42) can be coupled.

8. The vehicle window pane according to any one of claims 1 to 7, **characterized in that** a reflection layer for reflecting visible light is disposed on the plastic film (30) of the shading arrangement (20) that faces the inner window pane body (18).

9. The vehicle window pane according to any one of claims 1 to 8, **characterized in that** light-scattering centers (44) are disposed between the PDLC arrangement and the inner window pane body (18).

10. The vehicle window pane according to any one of claims 1 to 9, **characterized in that** the shading arrangement (20) is connected directly to the outer window pane body (16) by means of the adhesive polymer film (22) or the adhesive and/or directly to the inner window pane body (18) by means of the adhesive polymer film (24) or the adhesive.

11. A vehicle roof comprising a vehicle window pane according to any one of claims 1 to 10, wherein the vehicle window is a lid element (12) of a roof opening system or a fixed roof element (14).

## Revendications

1. Vitre de véhicule, notamment une vitre d'un toit de véhicule, la vitre de véhicule comprenant une structure composite comportant un corps de vitre extérieur (16), un corps de vitre intérieur (18, 18'), et un ensemble d'ombrage (20) disposé entre le corps de vitre extérieur (16) et le corps de vitre intérieur (18) et comprenant deux films plastiques (28, 30) et une couche (26) de cristaux liquides dispersés dans un polymère (PDLC) disposée entre les deux films plastiques (28, 30), l'ensemble d'ombrage (20) étant relié au corps de vitre extérieur (16) par l'intermédiaire d'un film adhésif de polymère (22) ou d'un adhésif et au corps de vitre intérieur (18) par l'intermédiaire d'un film adhésif de polymère (24) ou d'un adhésif, **caractérisé en ce qu'**au moins l'un des films plastiques (28, 30) et/ou la couche (26) de cristaux liquides dispersés dans un polymère sont teintés en noir de telle manière que la structure composite présente une transparence à la lumière visible inférieure à 30 % lorsque la couche de cristaux liquides est à l'état transparent et une transparence à la lumière visible ne dépassant pas 8 % à l'état bloquant.

2. Vitre de véhicule selon la revendication 1, **caractérisée en ce que** la structure composite comporte une couche réfléchissant l'infrarouge entre le corps de vitre extérieur (16) et la couche de cristaux liquides dispersés dans un polymère.

3. Vitre de véhicule selon la revendication 2, **caractérisée en ce que** la couche réfléchissant l'infrarouge est un revêtement (36) du film plastique (28) de l'ensemble d'ombrage (20) qui fait face au corps de vitre extérieur (16), ou un revêtement du corps de vitre extérieur du côté qui fait face à l'ensemble PDLC noir, ou un film revêtu entre le corps de vitre extérieur et l'ensemble PDLC.

4. Vitre de véhicule selon la revendication 2 ou 3, **caractérisée en ce que** la couche réfléchissant l'infrarouge présente une structure multicouche.

5. Vitre de véhicule selon l'une quelconque des revendications 2 à 4, **caractérisée en ce que** la couche réfléchissant l'infrarouge est constituée d'au moins une des substances du groupe comprenant l'argent, l'or, le cuivre, l'oxyde d'étain, le dioxyde de titane, l'oxyde de zinc, l'oxyde d'indium-étain, l'oxyde d'étain fluoré, l'oxyde de zinc-étain et l'oxyde d'aluminium.

6. Vitre de véhicule selon l'une quelconque des revendications 1 à 5, **caractérisée en ce que** les films plastiques (28, 30) de l'ensemble d'ombrage (20) sont des films PET.

7. Vitre de véhicule selon l'une quelconque des revendications 1 à 6, **caractérisée en ce qu'**une source de lumière (42) est prévue et **en ce que** le corps de vitre intérieur (18) est une vitre diffusante, dans laquelle de la lumière de la source de lumière (42) peut être couplée.

8. Vitre de véhicule selon l'une quelconque des revendications 1 à 7, **caractérisée en ce qu'**une couche réfléchissante pour réfléchir de la lumière visible est disposée sur le film plastique (30) de l'ensemble d'ombrage (20) qui fait face au corps de vitre intérieur (18).

9. Vitre de véhicule selon l'une quelconque des revendications 1 à 8, **caractérisée en ce que** des centres de diffusion de lumière (44) sont disposés entre l'ensemble PDLC et le corps de vitre intérieur (18).

10. Vitre de véhicule selon l'une quelconque des revendications 1 à 9, **caractérisée en ce que** l'ensemble d'ombrage (20) est relié directement au corps de vitre extérieur (16) par l'intermédiaire du film adhésif de polymère (22) ou de l'adhésif et/ou directement au corps de vitre intérieur (18) par l'intermédiaire du film adhésif de polymère (24) ou de l'adhésif.

11. Toit de véhicule comprenant une vitre de véhicule selon l'une quelconque des revendications 1 à 10, dans lequel la vitre de véhicule est un élément de couvercle (12) d'un système d'ouverture de toit ou un élément de toit fixe (14).
